# EUROPEAN PATENT SPECIFICATION

(11) **EP 3 886 293 B1**
(45) Date of publication and mention of the grant of the patent: **20.04.2022**
(21) Application number: 20165276.5
(22) Date of filing: 24.03.2020
(51) Int. Cl.: H02J 50/90, B60L 53/35

(54) **WIRELESS CHARGING DEVICE FOR BATTERY ELECTRIC VEHICLE**
DRAHTLOSE LADEVORRICHTUNG FÜR BATTERIEELEKTRISCHE FAHRZEUGE
DISPOSITIF DE CHARGE SANS FIL POUR VÉHICULE ÉLECTRIQUE À BATTERIE

(43) Date of publication of application: 29.09.2021
(73) Proprietor: VOLVO CAR CORPORATION, 405 31 Göteborg (SE)
(72) Inventor: ALMKVIST, Göran, 405 31 Göteborg (SE); BJÖRKHOLTZ, Jonas, 405 31 Göteborg (SE)
(74) Representative: Maiwald Patent- und Rechtsanwaltsgesellschaft mbH

(56) References cited:
- DE-A1-102016 106 827
- GB-A- 2 568 878

## Description

### TECHNICAL FIELD

The present invention relates to a wireless charging device, a battery electric vehicle, a method for charging a battery electric vehicle and a use of a wireless charging device in a battery electric vehicle.

### BACKGROUND ART

Charging convenience is important with electrical vehicles, in particular battery electric vehicles. A recent improvement of charging the battery electric vehicle lies in substituting a charging cable by wireless technology. A charging station for wireless charging comprises a ground pad, which is also called ground charging pad. Consequently, the battery electric vehicle comprises a vehicle pad, which is also called vehicle charging pad. The vehicle charging pad is brought into proximity of the ground charging pad to wirelessly charge the battery electric vehicle. However, when using wireless charging, it is very important to align the ground charging pad with the vehicle charging pad. The distance and the alignment between the plates effect a transferred efficiency and power. In general, the battery electric vehicle comprises the vehicle charging pad at a fixed location at the bottom of the vehicle and the driver of the vehicle has to control the battery electric vehicle in a precise way to align the vehicle charging pad with the ground charging pad.

DE 10 2016 106827 A1 describes a charge plate receiver assembly for an electric vehicle including an inductive charge plate receiver and a swing arm pivotally secured to a mounting surface. The charge plate receiver is pivotally secured to the swing arm such that the charge plate receiver travels along an arc defined by a length of the swing arm when the assembly moves between a retracted position and a deployed position. When retracted, the charge plate receiver may retract into a cavity, defined by under-body components. The charge plate receiver has a planar surface and the planar surface is generally perpendicular to a horizontal plane of the vehicle in the retracted position and parallel with the horizontal plane of the vehicle in the deployed position.

GB 2 568 878 A describes a vehicle charging apparatus with a wireless charge receiving pad. The charging pad is attached to a first arm, which is pivotally attached to a supporting structure of the vehicle about a first axis. When the batteries of the vehicle are to be charged, the first arm pivots about the first axis and the charging pad is swung through an arc between a stowed position and a deployed position.

### SUMMARY

There may, therefore, be a need to provide an improved wireless charging device for charging a battery electric vehicle.

The object of the present invention is solved by the subject-matter of the appended independent claims, wherein further embodiments are incorporated in the dependent claims.

According to a first aspect of the present invention, a battery electric vehicle is provided comprising a vehicle assembly and a wireless charging device. The wireless charging device for charging the battery electric vehicle comprises a vehicle charging pad, configured for charging the battery electric vehicle and movable arm assembly, configured for moving the vehicle charging pad in a vertical direction, vertical to the battery electric vehicle, and a transverse direction, transverse to a driving direction of the battery electric vehicle, from a stored position to a deployed position.

The term "battery electric vehicle", as used herein, comprises all types of vehicles that comprise an electric drive train and consequently an electric battery that can be charged. Thus, battery electric vehicle for example comprises all vehicle with a hybrid drive train concept.

The terms "vehicle charging pad" and "ground charging pad", as used herein, describe a pad, which comprises at least one charging coil that are configured to generate a time varying electromagnetic field. Via this electromagnetic field, power is transferred from the ground charging pad to the vehicle charging pad to charge the battery of the battery electric vehicle.

The adjustment of the vehicle charging pad to the ground charging pad in the driving direction can easily be done manually by the driver of the battery electric vehicle. Together with the transverse and vertical alignment of the vehicle charging pad, an improved positioning of the vehicle charging pad to the ground charging pad can be achieved.

This enhances the charging efficiency and increases possible max power used for charging.

Preferably, the wireless charging technology comprises resonant charging and inductive charging. Inductive charging, or in other words called inductive wireless power transfer, WPT, is limited to just a couple of millimeters distance between the transmitter, which is the ground charging pad, and the receiver, which is the vehicle charging pad. This distance is also called air gap. With an air gap in the centimeter range, the coupling decreases and with it, consequently the energy transfer efficiency drops. Working with an air gap in the centimeter range requires a resonant scheme using coupled resonant coils that can cope with low coupling factors. A standard for resonant wireless power transfer, which operates at a frequency of 6.78 MHz, allows charging of multiple devices simultaneously.

Preferably, in the deployed position, the vehicle charging pad is disposed at an ideal distance to the ground charging pad in a vertical direction and the vehicle charging pad is disposed centered to the ground charging pad in a horizontal direction. The ideal distance to the ground charging pad, which is also called air gap, is predetermined and may vary depending on the wireless charging technology used. Preferably, the air gap has a value of 30cm.

Thus, an improved wireless charging device for a battery electric vehicle is provided.

The movable arm assembly is configured to move the charging pad along a trajectory. The trajectory has the shape of a pendulum swing.

In other words, a "pendulum effect" is provided that can adjust the transverse position of the vehicle charging pad with a very little vertical change.

Preferably, the trajectory is defined by a length and a shape of the movable arm assembly.

Preferably, the trajectory, on the way from the stored position to the deployed position, comprises a first section, in which a movement of the vehicle charging pad in the vertical direction is higher than a movement of the vehicle charging pad in the transverse direction, and a second section, in which a movement of the vehicle charging pad in the transverse direction is higher than a movement of the vehicle charging pad in the vertical direction, and a second section.

In general, the amount of movement of the vehicle charging pad along the trajectory from the stored position to the deployed position in the vertical direction decreases, while the amount of movement in the transverse direction increases. Consequently, the charging pad can be transversely aligned with the ground charging pad without significantly changing the vertical distance of the vehicle charging pad to the ground charging pad. In other words, a gradient of the vertical movement of the charging pad decreases from the storage position to the deployed position, while a gradient of the transverse movement of the vehicle charging pad increases from the storage position to the deployed position.

Preferably, the deployed position relative to the stored position is not predetermined. Since the goal of the movement of the vehicle charging pad from the stored position to the deployed position is the alignment of the vehicle charging pad to the ground charging pad in a vertical and transverse direction, the deployed position is dependent on the original position of the vehicle charging pad to the ground charging pad. In other words, the deployed position might not always be at the end of the possible trajectory. Thus, the deployed position is determined automatically by the battery electric vehicle or manually by the driver dependent on the transverse alignment between the vehicle charging pad and the ground charging pad.

Thus, the vehicle charging pad can be aligned dynamically to the ground charging pad.

Thus, an improved wireless charging device for a battery electric vehicle is provided.

In a preferred embodiment, a size of the vehicle charging pad is smaller than a size of the ground charging pad.

Due to the improved accuracy of alignment of the vehicle charging pad and the ground charging pad, the vehicle charging pad can be dimensioned significantly smaller than the ground charging pad. The transverse alignment of the vehicle charging pad allows centering the vehicle charging pad to the ground charging pad.

The term "size of the vehicle charging pad" and "size of the ground charging pad" relate to surface of the respective pad, used for charging the battery electric vehicle. In other words, the size of the respective pads rather relates to their horizontal dimension than their vertical dimension.

Thus, the size and costs of the vehicle charging pad and consequently the wireless charging device are improved.

Thus, an improved wireless charging device for a battery electric vehicle is provided.

The vehicle charging pad is disposed in a horizontal orientation moving along the trajectory.

In the stored position, the charging pad is disposed horizontally on the same level as the underbody of the vehicle; wherein in the deployed position, the charging pad is disposed vertically distant to the underbody of the vehicle.

As described, the deployed position is not predetermined. Thus, in order to align the vehicle charging pad dynamically to the ground charging pad in a vertical and transverse direction, the vehicle charging pad is oriented in a horizontal position along the trajectory. Consequently, the deployed position can be found by centering the vehicle charging pad to the ground charging pad.

Thus, an improved wireless charging device for a battery electric vehicle is provided.

In a preferred embodiment, the movable pad comprises a pad sealing frame, configured to seal the movable arm assembly in the storage position within the battery electric vehicle.

Preferably, the pad sealing frame and/or the vehicle sealing frame comprises a plastic strip for sealing.

Preferably, the battery electric vehicle comprises an vehicle sealing frame, which is disposed on the vehicle underbody of the battery electric vehicle and determines an opening, in which the moveable arm assembly and the at least part of the vehicle charging pad are taken in.

Preferably, in the storage position, the pad sealing frame is in sealing contact with the vehicle sealing frame. Consequently, only the lower surface of the charging pad is exposed to the environment and thus road dirt and dust, in the storage position. The rest of the charging pad is protected by the underbody of the battery electric vehicle.

Thus, the durability of the movable arm assembly is improved, because when the vehicle charging pad is in the stored position, it is stored in a sealed volume where all relevant parts like connections and/or links are protected from dust, dirt and water. Only a flat surface of the vehicle charging pad is open for ambient effects.

In addition, a low cost movable arm assembly can be used for the application.

Thus, an improved wireless charging device for a battery electric vehicle is provided.

In a preferred embodiment, the movable arm assembly comprises at least a first arm and a second arm. The first arm is rotatable supported at a first end of the vehicle charging pad and the first arm is rotatable supported at a first mounting device connected with the battery electric vehicle. The second arm is rotatable supported at a second end of the vehicle charging pad and the second arm is rotatable supported at a second mounting device connected with the battery electric vehicle.

The rotatable support of the ends of the arms of the movable arm assembly allow pivoting the vehicle charging pad from the storage position to the deployed position, wherein the vehicle charging pad is always oriented in a horizontal position.

Thus, an improved wireless charging device for a battery electric vehicle is provided.

In a preferred embodiment, the first arm has a straight shape. The second arm has a bend shape.

Preferably, the vehicle sealing frame of the battery electric vehicle is disposed in a position transversely shifted from a transvers center position of the battery electric vehicle.

Thus, in order to allow a movement of the vehicle charging pad along a pendulum trajectory, one of the arms of the arm assembly, in this case the second arm, has a bend shape. Thus, the second arm can reach through the opening of the vehicle sealing frame and hold the movable charging pad in a position transversely shifted from the vehicle sealing frame.

Thus, an improved wireless charging device for a battery electric vehicle is provided.

In a preferred embodiment, the second arm comprises a bend section and a straight section.

Preferably, the straight section stays within the battery electric vehicle in any position of the trajectory, while the bend section reaches through the opening of the vehicle sealing frame when moving the vehicle charging pad along the trajectory.

Preferably, the both ends of the second arm are disposed at the same transverse position, vertically distant from each other, when the vehicle charging pad is at the maximal possible deployed position.

In a preferred embodiment, the bend section and the straight section are connected with each other under a right angle.

Preferably, the bend section has the shape of the trajectory.

In a preferred embodiment, the vehicle assembly comprises a scalable product architecture platform, wherein the wireless charging device is supported at the scalable product architecture platform.

According to a second aspect of the present invention, there is a method for wireless charging of a battery electric vehicle comprising a wireless charging device, comprising: Disposing the battery electric vehicle over a wireless charging station, moving the vehicle charging pad of the wireless charging device in a deployed position by moving the vehicle charging pad in vertical direction vertical to the battery electric vehicle and a transverse direction transverse to the driving direction of the battery electric vehicle and wirelessly charging the battery electric vehicle via the wireless charging device.

The method may be at least partly computer-implemented, and may be implemented in software or in hardware, or in software and hardware. Further, the method may be carried out by computer program instructions running on means that provide data processing functions.

The data processing means may be a suitable computing means, such as an electronic control module etc., which may also be a distributed computer system. The data processing means or the computer, respectively, may comprise one or more of a processor, a memory, a data interface, or the like.

It should be noted that the above embodiments may be combined with each other irrespective of the aspect involved. Accordingly, the method may be combined with structural features and, likewise, the apparatus and the system may be combined with features described above with regard to the method.

These and other aspects of the present invention will become apparent from and elucidated with reference to the embodiments described hereinafter.

### BRIEF DESCRIPTION OF DRAWINGS

Exemplary embodiments of the invention will be described in the following with reference to the following drawings.
- Fig. 1: shows a perspective view of the wireless charging device in a stored position;
- Fig. 2: shows a perspective view of the wireless charging device in a deployed position;
- Fig. 3: shows another perspective view of the wireless charging device in a stored position;
- Fig. 4: shows another perspective view of the wireless charging device in a deployed position;
- Fig. 5: shows a schematic view of inductive charging; and
- Fig. 6: shows a schematic view of resonant charging.

The figures are merely schematic representations and serve only to illustrate embodiments of the invention. Identical or equivalent elements are in principle provided with the same reference signs.

### DESCRIPTION OF EMBODIMENTS

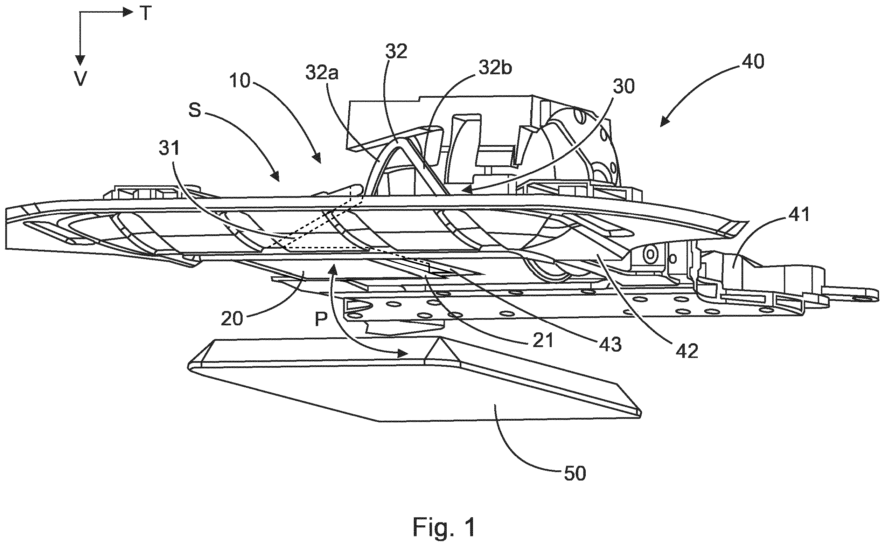

Figures 1 to 4 show a perspective view of a wireless charging device 10. The wireless charging device 10 comprises a vehicle charging pad 20, configured for charging a battery electric vehicle via a ground charging pad 50, and a moveable arm assembly 30, configured for moving the vehicle charging pad 20 along a trajectory P from a stored position S into a deployed position D. The moveable arm assembly 30 connects the vehicle charging pad 20 via a first mounting device 44 and a second mounting device 45 with a vehicle assembly 40. The vehicle assembly 40 comprises a vehicle underbody 42, protecting a vehicle frame 41 from environmental influences.

The movable arm assembly 30 comprises a first arm 31 and a second arm 32. The first arm 31 rotatable connects the vehicle charging pad 20 at a first end 20a of the vehicle charging pad 20 with the vehicle assembly 40 at a first mounting device 44. The first mounting device 44 is disposed at the vehicle frame 41. The second arm 32 rotatable connects the vehicle charging pad 20 at a second end 20b of the vehicle charging pad 20 with the vehicle assembly 40 at a second mounting device 45. The first arm 31 in this case comprises two arm portions disposed at different sides of the first end 20a of the vehicle charging pad 20.

The first arm 31 has a straight shape, while the second arm 32 has a bend shape. The second arm 32 comprises a bend section 32a, connected to the second mounting device 45, and a straight section 32b, connected to the first end 20a of the vehicle charging pad 20. In this case, the bend section 32a and the straight section 32b enclose an angle of around 90 degree. The transition between the straight section 32b and the bend section 32a allows the bend section 32a to pivot around the vehicle sealing frame 43 through the opening of the vehicle sealing frame 43 when moving from the storage position S to the deployed position D. Thus, the vehicle charging pad 20 can be moved in a transverse direction T while always being horizontally oriented.

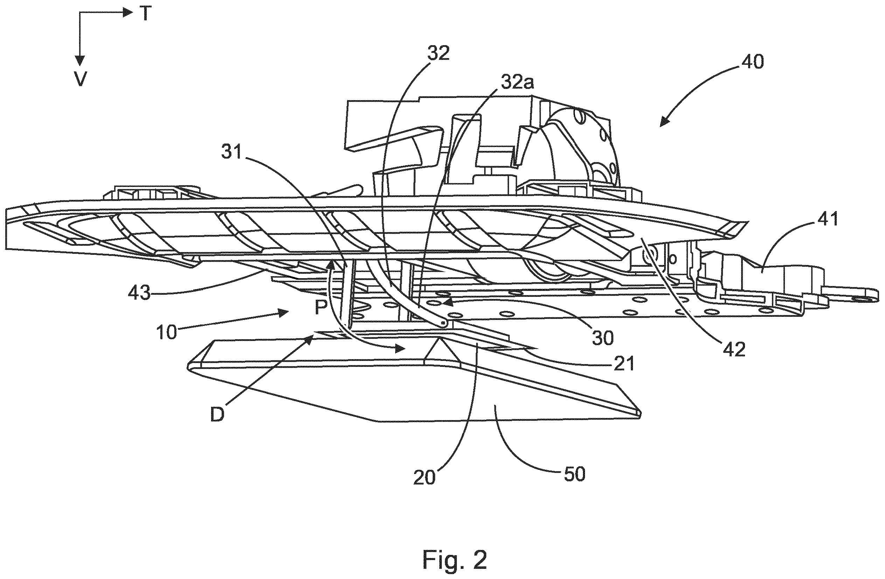

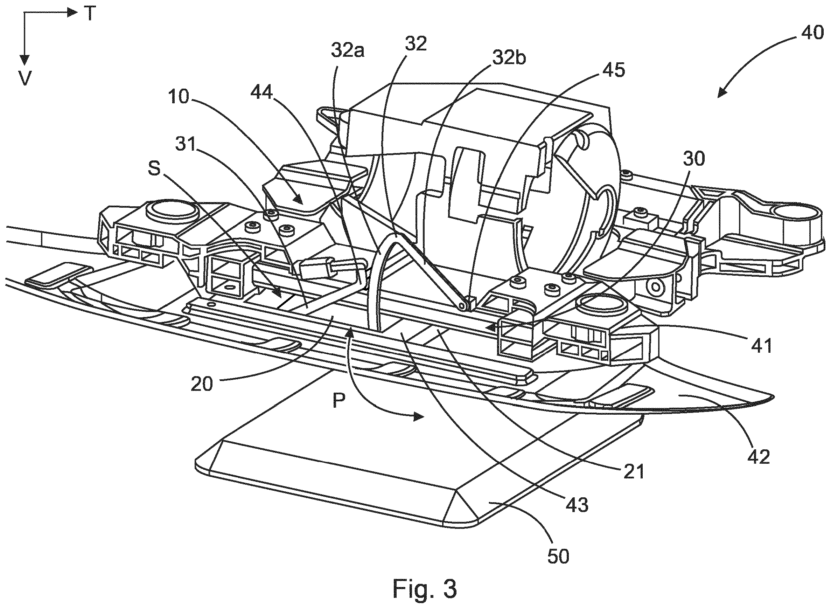

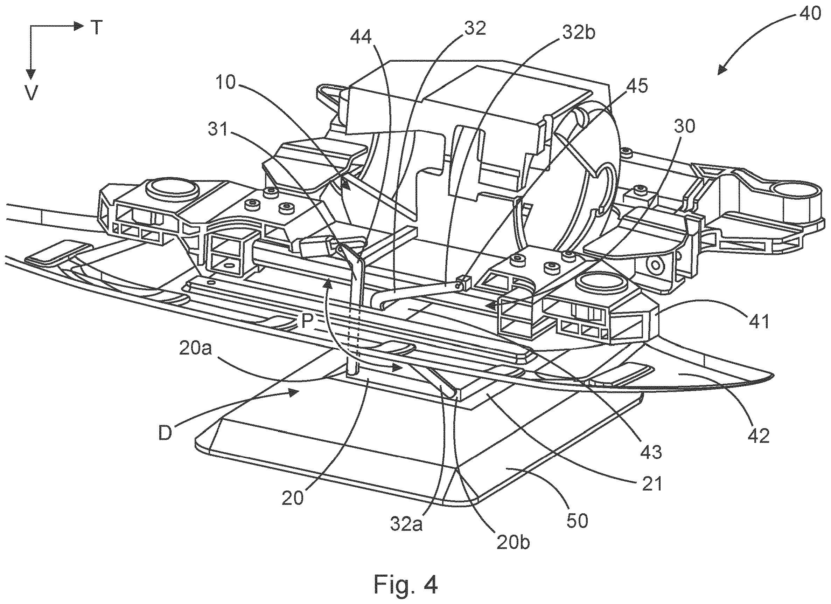

Fig. 1 and Fig. 3 show the vehicle charging pad 20 in the stored position S and Fig. 2 and Fig. 4 show the vehicle charging pad 20 in the deployed position D.

In the stored position S, the wireless charging device 10 is almost completely stored within the vehicle assembly 40. Only a lower surface of the vehicle charging pad 20 is disposed on a vertical height of the vehicle underbody 42 and exposed to the environment. In particular, the movable arm assembly 30 is completely stored within the vehicle assembly 40 and sealed from the environment. The sealing is achieved by a pad sealing frame 21 disposed around the vehicle charging pad 20 and a vehicle sealing frame 43 disposed at the vehicle underbody 42. In other words, the vehicle underbody 42 comprises the vehicle sealing frame 43, which provides an opening from the inside of the vehicle assembly 40 to the environment. Through this opening, the movable arm assembly 30 and the vehicle charging pad 20 can be moved in a vertical direction V towards the ground charging pad 50 and in a transverse direction T transverse to a driving direction of a vehicle comprising the vehicle assembly 40. In the stored position S, the vehicle charging pad 20 and the pad sealing frame 21 seal the opening of the vehicle sealing frame 43. The pad sealing frame 21 and/or the vehicle sealing frame might be made of plastic.

In the deployed position D, the vehicle charging pad 20 is aligned with the ground charging pad 50 in the vertical direction and the transverse direction. This assumes that a driver of the vehicle has located the vehicle in the driving direction in a position, wherein the vehicle charging pad 20 is already aligned with the ground charging pad 50 in the driving direction. In the deployed position D, the vehicle charging pad 20 is disposed in a predetermined desired vertical position, wherein a distance between the vehicle charging pad 20 and the ground charging pad, which is also called air gap, has a desired value for charging the vehicle. In the driving direction and the transverse direction, the vehicle charging pad 20 is in the deployed position D arranged centered to the ground charging pad 50. In this case, the dimension of the vehicle charging pad 20 is smaller than the dimension of the ground charging pad 50.

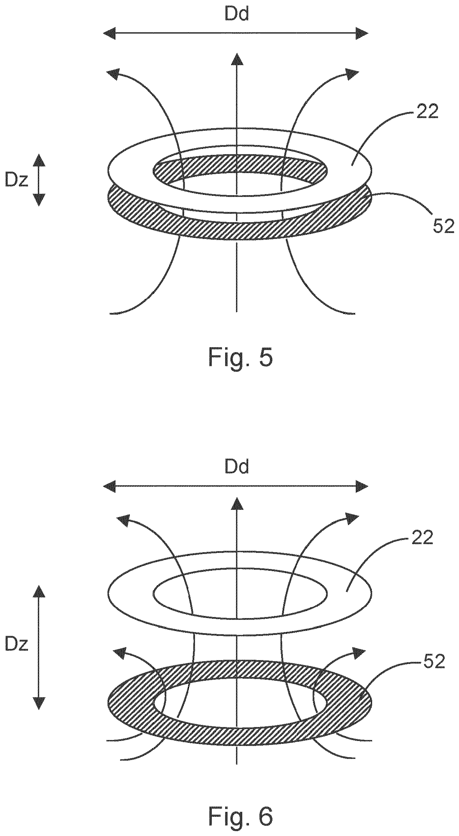

Fig. 5 shows a schematic view of inductive wireless charging. A ground charging coil 52 and a vehicle charging coil 22 are used for transmitting energy from a charging station to the vehicle. The ground charging coil 52 of the charging station thus is considered a transmitter coil, while the vehicle charging coil 22 of the wireless charging device 10 is considered a receiver coil. In order to achieve good charging efficiency, a coil distance Dz, which is a vertical distance between the ground charging coil 52 and the vehicle charging coil 22 is as small as possible. Thus, high power transfer is possible, however only one single device can be charged at the same time. In addition, the coil distance Dz should be in the range of a couple of millimeters. For more spatial freedom, resonance wireless charging is advantageous.

Fig. 6 shows a schematic view of resonant wireless charging. The coil distance Dz between the vehicle charging coil 22 and the ground charging coil 52 can be higher, for example in the centimeter range, compared to inductive wireless charging. However, if the coil distance Dz is getting too small, the mutual inductance of the coils causes the oscillating magnetic fields to collapse and power transfer ceases. Compared to inductive wireless charging, a coil diameter Dd is higher.

The proposed wireless charging device 10 can be advantageously used for indicative wireless charging as well as resonant wireless charging.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: wireless charging device
- 20: vehicle charging pad
- 20a: first end of vehicle charging pad
- 20b: second end of vehicle charging pad
- 21: pad sealing frame
- 22: vehicle charging coil
- 30: movable arm assembly
- 31: first arm
- 32: second arm
- 32a: bend section
- 32b: straight section
- 40: vehicle assembly
- 41: vehicle frame
- 42: vehicle underbody
- 43: vehicle sealing frame
- 44: first mounting device
- 45: second mounting device
- 50: ground charging pad
- 52: ground charging coil
- V: vertical direction
- T: transverse direction
- S: stored position
- D: deployed position
- P: trajectory
- Cz: coil distance
- Cd: coil diameter

## Claims

1. Battery electric vehicle, comprising: a vehicle assembly (40), and a wireless charging device (10) for charging the battery electric vehicle, the wireless charging device (10) comprising
a vehicle charging pad (20), configured for charging the battery electric vehicle; and
a movable arm assembly (30), configured for moving the charging pad (20) in a vertical direction (V), vertical to the battery electric vehicle, and a transverse direction (T), transverse to a driving direction of the battery electric vehicle, from a stored position (S) to a deployed position (D);
wherein the movable arm assembly (30) being configured to move the charging pad (20) from the stored position (S) to the deployed position (D) along a trajectory (P);
the trajectory (P) having the shape of a pendulum swing; and
the vehicle charging pad (20) being disposed in a horizontal orientation while moving along the trajectory (P).

2. Battery electric vehicle of claim 1, the trajectory (P) being defined by a length and a shape of the movable arm assembly (30).

3. Battery electric vehicle of any of the preceding claims, the vehicle charging pad (20) comprising a pad sealing frame (21), configured to seal the movable arm assembly (30) in the storage position (S) within the battery electric vehicle.

4. Battery electric vehicle of any of the preceding claims,
the movable arm assembly (30) comprising at least a first arm (22) and a second arm (23);
the first arm (22) being rotatable supported at a first end (24) of the vehicle charging pad (20) and the first arm (22) further being rotatable supported at a first mounting device (41) of the battery electric vehicle; and
the second arm (23) being rotatable supported at a second end (25) of the vehicle charging pad (20) and the second arm (23) further being rotatable supported at a second mounting device (42) connected with the battery electric vehicle.

5. Battery electric vehicle of claim 4,
the first arm (22) having a straight shape; and
the second arm (23) having a bend shape.

6. Battery electric vehicle of any of the claims 4 or 5, the second arm (23) comprising a bend section (23a) and a straight section (23b).

7. Battery electric vehicle of claim 6, the bend section (23a) and the straight section (23b) being connected with each other under a right angle.

8. Battery electric vehicle of any of claims 1 to 7
the vehicle assembly (40) comprising a scalable product architecture platform,
the wireless charging device (10) being supported at the scalable product architecture platform.

9. Method for wireless charging of a battery electric vehicle comprising a wireless charging device (10), comprising:
disposing the battery electric vehicle over a wireless charging station;
moving a vehicle charging pad (20) of the wireless charging device (10) from a stored position (S) in a deployed position (D) along a trajectory (P), the trajectory (P) having the shape of a pendulum swing and the vehicle charging pad (20) being disposed in a horizontal orientation while moving along the trajectory (P), by moving the vehicle charging pad (20) in vertical direction (V) vertical to the battery electric vehicle and a transverse direction (T) transverse to a driving direction of the battery electric vehicle; and
wirelessly charging the battery electric vehicle via the wireless charging device (10).

## Patentansprüche

1. Batterie-Elektrofahrzeug, umfassend:
eine Fahrzeuganordnung (40), und eine Drahtlosladevorrichtung (10) zum Laden des Batterie-Elektrofahrzeugs,
wobei die Drahtlosladevorrichtung (10) umfasst:
ein Fahrzeug-Ladepad (20), das zum Laden des Batterie-Elektrofahrzeugs eingerichtet ist; und
eine bewegliche Armanordnung (30), die dafür eingerichtet ist, das Ladepad (20) in einer vertikalen Richtung (V), die senkrecht zu dem Batterie-Elektrofahrzeug verläuft, und in einer Querrichtung (T), die quer zu einer Fahrtrichtung des Batterie-Elektrofahrzeugs verläuft, aus einer verstauten Position (S) in eine Betriebsposition (D) zu bewegen;
wobei die bewegliche Armanordnung (30) dafür eingerichtet ist, das Ladepad (20) aus der verstauten Position (S) entlang einer Trajektorie (P) in die Betriebsposition (D) zu bewegen;
wobei die Trajektorie (P) die Form einer Pendelschwingung aufweist; und
wobei das Fahrzeug-Ladepad (20) in einer horizontalen Ausrichtung angeordnet ist, während es sich entlang der Trajektorie (P) bewegt.

2. Batterie-Elektrofahrzeug nach Anspruch 1, wobei die Trajektorie (P) durch eine Länge und eine Form der beweglichen Armanordnung (30) definiert ist.

3. Batterie-Elektrofahrzeug nach einem der vorangehenden Ansprüche, wobei das Fahrzeug-Ladepad (20) einen Pad-Abdichtungsrahmen (21) umfasst, der dafür eingerichtet ist, die bewegliche Armanordnung (30) in der Verstauposition (S) innerhalb des Batterie-Elektrofahrzeugs abzudichten.

4. Batterie-Elektrofahrzeug nach einem der vorangehenden Ansprüche,
wobei die bewegliche Armanordnung (30) mindestens einen ersten Arm (22) und einen zweiten Arm (23) umfasst;
wobei der erste Arm (22) drehbar an einem ersten Ende (24) des Fahrzeug-Ladepads (20) gestützt ist und der erste Arm (22) des Weiteren drehbar an einer ersten Montagevorrichtung (41) des Batterie-Elektrofahrzeugs gestützt ist; und
wobei der zweite Arm (23) drehbar an einem zweiten Ende (25) des Fahrzeug-Ladepads (20) gestützt wird und der zweite Arm (23) des Weiteren drehbar an einer zweiten Montagevorrichtung (42) gestützt ist, die mit dem Batterie-Elektrofahrzeug verbunden ist.

5. Batterie-Elektrofahrzeug nach Anspruch 4,
wobei der erste Arm (22) eine gerade Form aufweist; und
wobei der zweite Arm (23) eine gebogene Form aufweist.

6. Batterie-Elektrofahrzeug nach einem der Ansprüche 4 und 5, wobei der zweite Arm (23) einen gebogenen Abschnitt (23a) und einen geraden Abschnitt (23b) umfasst.

7. Batterie-Elektrofahrzeug nach Anspruch 6, wobei der gebogene Abschnitt (23a) und der gerade Abschnitt (23b) unter einem rechten Winkel miteinander verbunden sind.

8. Batterie-Elektrofahrzeug nach einem der Ansprüche 1 bis 7,
wobei die Fahrzeuganordnung (40) eine skalierbare Produktarchitekturplattform umfasst,
wobei die Drahtlosladevorrichtung (10) an der skalierbaren Produktarchitekturplattform gestützt ist.

9. Verfahren zum drahtlosen Laden eines Batterie-Elektrofahrzeugs, umfassend eine Drahtlosladevorrichtung (10), wobei das Verfahren umfasst:
Anordnen des Batterie-Elektrofahrzeugs über einer Drahtlosladestation;
Bewegen eines Fahrzeug-Ladepads (20) der Drahtlosladevorrichtung (10) von einer verstauten Position (S) in eine Betriebsposition (D) entlang einer Trajektorie (P), wobei die Trajektorie (P) die Form einer Pendelschwingung aufweist und das Fahrzeug-Ladepad (20) in einer horizontalen Ausrichtung angeordnet ist, während es sich entlang der Trajektorie (P) bewegt, durch Bewegen des Fahrzeug-Ladepads (20) in vertikaler Richtung (V) vertikal zu dem Batterie-Elektrofahrzeug und einer Querrichtung (T) quer zu einer Antriebsrichtung des Batterie-Elektrofahrzeugs; und
drahtloses Laden des Batterie-Elektrofahrzeugs mittels der Drahtlosladevorrichtung (10).

## Revendications

1. Véhicule électrique à batterie, comprenant : un ensemble véhicule (40), et un dispositif de charge sans fil (10) pour charger le véhicule électrique à batterie,
le dispositif de charge sans fil (10) comprenant une plage de charge de véhicule (20), configurée pour charger le véhicule électrique à batterie ; et
un ensemble de bras mobiles (30), configuré pour déplacer la plage de charge (20) dans une direction verticale (V), verticalement au véhicule électrique à batterie, et une direction transversale (T), transversalement à une direction d'entraînement du véhicule électrique à batterie, d'une position stockée (S) à une position déployée (D) ; dans lequel l'ensemble de bras mobiles (30) est configuré pour déplacer la plage de charge (20) de la position stockée (S) à la position déployée (D) le long d'une trajectoire (P) ;
la trajectoire (P) ayant la forme d'un mouvement de balancier ; et
la plage de charge de véhicule (20) étant disposée dans une direction horizontale tout en se déplaçant le long de la trajectoire (P).

2. Véhicule électrique à batterie selon la revendication 1, la trajectoire (P) étant définie par une longueur et une forme de l'ensemble de bras mobiles (30).

3. Véhicule électrique à batterie selon l'une quelconque des revendications précédentes,
la plage de charge de véhicule (20) comprenant un cadre d'étanchéité de plage (21), configuré pour assurer l'étanchéité de l'ensemble de bras mobiles (30) dans la position de stockage (S) au sein du véhicule électrique à batterie.

4. Véhicule électrique à batterie selon l'une quelconque des revendications précédentes,
l'ensemble de bras mobiles (30) comprenant au moins un premier bras (22) et un second bras (23) ;
le premier bras (22) étant supporté en rotation à une première extrémité (24) de la plage de charge de véhicule (20) et le premier bras (22) étant en outre supporté en rotation au niveau d'un premier dispositif de montage (41) du véhicule électrique à batterie ; et
le second bras (23) étant supporté en rotation à une seconde extrémité (25) de la plage de charge de véhicule (20) et le second bras (23) étant en outre supporté en rotation au niveau d'un second dispositif de montage (42) relié au véhicule électrique à batterie.

5. Véhicule électrique à batterie selon la revendication 4,
le premier bras (22) ayant une forme droite ; et
le second bras (23) ayant une forme de coude.

6. Véhicule électrique à batterie selon l'une quelconque des revendications 4 ou 5,
le second bras (23) comprenant une section de coude (23a) et une section droite (23b).

7. Véhicule électrique à batterie selon la revendication 6, la section de coude (23a) et la section droite (23b) étant reliées l'une à l'autre selon un angle droit.

8. Véhicule électrique à batterie selon l'une quelconque des revendications 1 à 7
l'ensemble véhicule (40) comprenant une plateforme d'architecture de produit évolutive,
le dispositif de charge sans fil (10) étant supporté au niveau de la plateforme d'architecture de produit évolutive.

9. Procédé de charge sans fil d'un véhicule électrique à batterie comprenant un dispositif de charge sans fil (10), comprenant :
la disposition du véhicule électrique à batterie sur une station de charge sans fil ;
le déplacement d'une plage de charge de véhicule (20) du dispositif de charge sans fil (10) d'une position stockée (S) à une position déployée (D) le long d'une trajectoire (P), la trajectoire (P) ayant la forme d'un mouvement de balancier et la plage de charge de véhicule (20) étant disposée dans une orientation horizontale tout en se déplaçant le long de la trajectoire (P), en déplaçant la plage de charge de véhicule (20) dans une direction verticale (V) verticalement au véhicule électrique à batterie et une direction transversale (T) transversalement à une direction d'entraînement du véhicule électrique à batterie ; et
la charge sans fil du véhicule électrique à batterie via le dispositif de charge sans fil (10).
